# EUROPÄISCHE PATENTSCHRIFT

(11) **EP 3 062 405 B1**
(45) Veröffentlichungstag und Bekanntmachung des Hinweises auf die Patenterteilung: **18.07.2018**
(21) Anmeldenummer: 15305283.2
(22) Anmeldetag: 24.02.2015
(51) Int. Cl.: H02G 3/04

(54) **Steckverbindung für Abdeckblenden, insbesondere von Abdeckblenden für Geräteeinbaukanäle**
Plug-in connection for covers, in particular for covers for device installation channels
Connecteur à fiches pour écrans de protection, en particulier écrans de protection pour des goulottes de montage d'appareils

(43) Veröffentlichungstag der Anmeldung: 31.08.2016
(73) Patentinhaber: Tehalit GmbH, 67716 Heltersberg (DE)
(72) Erfinder: Lettermann, Gert, 67688 Rodenbach (DE); Mattfeld, Christian, 66919 Schauerberg (DE)
(74) Vertreter: Nuss, Laurent

(56) Entgegenhaltungen:
- EP-A2- 1 494 327
- CH-A- 435 396
- JP-A- H11 223 204
- JP-A- 2007 147 042
- US-A- 4 307 435
- US-A1- 2002 096 606

## Beschreibung

Die vorliegende Erfindung betrifft eine Steckverbindung für Abdeckblenden, insbesondere von Abdeckblenden für Geräteeinbaukanäle, wobei die Abdeckblende insbesondere eine im Wesentlichen rechteckige oder quadratische ebene Fläche aufweist, wobei deren Rand mindestens an einer der Seiten, vorzugsweise an zwei gegenüberliegenden Seiten, jeweils mindestens ein männliches und/oder ein weibliches Verbindungsorgan aufweist, die mit entsprechenden männlichen und/oder weiblichen Verbindungsorgane einer anderen zu verbindenden benachbarten Abdeckblende, vorzugsweise einer anderen mit der ersten identischen Abdeckblende, formschlüssig kooperieren um beide mit der Hand lösbar zu verbinden, wobei die Steckverbindung jeweils aus einer Kombination aus einem männlichen und einem weiblichen Verbindungsorgan besteht.

Geräteeinbaukanäle sind Leitungsführungskanäle, die für den Einbau von Elektroinstallationsgeräten, z. B. Schalter, Steckdosen, Sicherungen usw. bestimmt sind. Sie werden seit vielen Jahren in den unterschiedlichsten Ausführungen in großen Mengen hergestellt und verarbeitet. Sie bestehen im Wesentlichen aus einem trogförmigen Unterteil mit einem überwiegend U- bis C-förmigen Querschnitt und einem Deckel, der auch Abdeckblende genannt wird. Diese Blenden schließen den Kanal und lassen einen offenen oder eventuell schließbaren Zugang zu den o. g. Elektrogeräten. Sie haben daher meistens eine schützende und/oder eine ästhetische Funktion.

Die Befestigung der Deckel oder Abdeckblenden am Profil des Kanals selbst erfolgt gewöhnlich mit Hilfe von speziellen Deckelhalteprofilen, die die offene Frontseite des Kanalunterteils begrenzen. An den Stellen, an denen Installationsgeräte eingesetzt sind, werden somit spezielle Abdeckblenden verwendet, um die elektrische Sicherheit sowie die Ästhetik zu gewährleisten. Diese Abdeckblenden werden entweder zusätzlich auf die Deckelhalteprofile des Geräteeinbaukanals oder auf das bereits montierte Installationsgerät aufgerastet. Man vergleiche beispielsweise DE-U-93 14 551 oder FR-A 2 756 431.

Die Breite der Abdeckblenden entspricht normalerweise der offenen Breite des U- oder C-förmigen Profiloberteils des Kanals. Diese ist der Regel entlang der Länge des Kanals konstant und entspricht den üblichen Standards der Industrie oder des Baugewerbes. Die Länge der meist geradlinig verlaufenden Kanäle (z. B. entlang der Wand oder vom Fußboden in Richtung Decke eines Zimmers) hängt natürlich von den Dimensionen des Baus ab. Die Länge der Deckel oder Abdeckblendenteile selbst hängt entweder von der Länge der zu montierenden Geräte (spezifische Deckel passend für bestimmte Geräteeinheiten) oder der Länge der Kanäle ab (einfache Blenden oder Blendenteile ohne Öffnung die nur zur Kaschierung des Inneren des Kanals vorgesehen sind). Während die Breite der Abdeckblenden in der Regel um die zehn Zentimeter beträgt, kann deren Länge je nach Modell ein paar Zentimeter (Randblendenstück), oder ca. 5-30 cm (Blendenteile für einfache Steckdoseneinheiten oder andere größere Elektrogeräte) bis hin zu mehreren Metern (Blenden als Kaschierleisten) betragen. Am Ende des Kanals werden manchmal Blendenteile benötigt, die als Schlussstück fungieren und montiert werden um ein sauberes Ende bzw. einen ästhetischen Rand zu ermöglichen. Manchmal sind die Abdeckblenden aus mehreren Abschnitten gebildet, die aneinander gereiht und miteinander verbunden werden müssen.

Zur Verbindung von zwei benachbarten kleineren Abdeckblenden entlang des Kanals, oder zur Verbindung von verschiedenen Blendenteilen unter sich werden klassische Steckverbindungen verwendet, die jeweils am entsprechenden Rand des zu verbindenden Blendenteils montiert oder dort schon angebracht sind (insbesondere bei Plastikteilen die im Spritzgießverfahren hergestellt worden sind). Diese funktionieren nach dem Prinzip der komplementären Formen und bilden formschlüssige, einfach zu bedienende Verbindungsmittel, die sich leicht zusammenstecken bzw. wieder leicht trennen lassen. Besonders günstig sind Formen die nach der klassischen männlich-weiblich-Verbindung funktionieren.

Nachteilig an den handelsüblichen Verbindungsmitteln für Abdeckblenden ist die Tatsache, dass die Verbindung durch einfaches Einklicken der beiden Teile durch den Monteur meistens leicht und schnell zustande kommt jedoch deren Trennung relativ schwieriger ist und eventuell zu einer Beschädigung oder Zerstörung der Verbindungsorgane führen kann, z. B. wenn der notwendige Kraftaufwand schwer abzuschätzen ist oder die Trennung bestimmte zusätzliche Handhabungen oder Eingriffe benötigt. Kompliziertere Verbindungsmittel können insbesondere eine festere und sichere Verbindung garantieren, aber haben wiederum negative Auswirkungen auf den Endpreis der Blende und die Einfachheit deren Montage bzw. Demontage. Als gattungsgemäßes Beispiel der o. g. Steckverbindung kann man auf das Patent EP 1 832 692 B1 oder US 2002/096606 A1 verweisen. Der vorliegenden Erfindung liegt daher die Aufgabe zugrunde, eine Steckverbindung für Abdeckdeckel oder Abdeckblenden dieses Typs anzugeben, die diese Nachteile weitestgehend behebt.

Diese Aufgabe wird gelöst durch eine Steckverbindung für Abdeckblenden mit den Merkmalen des Anspruchs 1 sowie eine Abdeckblende nach Anspruch 9.

Die erfindungsgemäße Steckverbindung ist dadurch gekennzeichnet, dass das männliche Verbindungsorgan als ein Stecker mit einem gabelförmigen Ende mit zwei Stegen ausgebildet ist, das mit einem komplementärem weiblichen Verbindungsorgan formschlüssig kooperiert, das als eine am Rand ausgebildete formschlüssige Einbuchtung oder Nut ausgebildet ist, wobei: - die Einbuchtung in Richtung Rand gesehen einen im Wesentlichen trapezförmigen Querschnitt aufweist, der mit der jeweils äußeren schrägen Form der zwei Stege formschlüssig kooperiert,
- die Einbuchtung eine horizontale Aufliegefläche aufweist, die zum äußeren freien Rand hin abgeschrägt ist und die mit den unten abgeschrägten freien Enden der zwei Stege formschlüssig kooperiert,
- die Einbuchtung entlang ihrer Tiefe, links und rechts, durch zwei seitlichen abgeschrägte Wände begrenzt ist, deren freien Enden zwei ebene vertikale Flächen aufweisen, die mit zwei Vorsprüngen am freien Ende der zwei Stege des Steckers zu dessen Verriegelung in der Einbuchtung kooperieren, und
- die Einbuchtung im Bereich der abgeschrägten Aufliegefläche am äußeren freien Rand einen erweiterten Eingang aufweist, der die Einführung der zwei Vorsprünge des Steckers in die Einbuchtung erleichtert.

Die vorliegende Erfindung betrifft ferner eine Abdeckblende, insbesondere für Geräteeinbaukanäle, wobei die Abdeckblende insbesondere eine im Wesentlichen rechteckige oder quadratische ebene Fläche aufweist, wobei deren Rand mindestens einer der Seiten, vorzugsweise an zwei gegenüberliegenden Seiten, jeweils mindestens ein Stecker und/oder eine Einbuchtung aufweist, der bzw. die mit einem entsprechenden Stecker und/oder einer entsprechenden Einbuchtung der zu verbindenden anderen Abdeckblende kooperieren um beide mit der Hand lösbar zu verbinden, dadurch gekennzeichnet, dass die Steckverbindung die Merkmale einer erfindungsgemäßen Steckverbindung aufweist.

Dank der vorliegenden Erfindung können verschiedene Abdeckblenden oder Abdeckblendenteile miteinander einfach und zuverlässig (solide) verbunden werden und gleichzeitig wieder einfach und ohne großen Kraftaufwand gelöst werden, z. B. bei einem Austausch, einer Reparatur, einer Änderung, Ergänzung, usw. am Geräteeinbaukanal.

Dank der erfindungsgemäßen Geometrie wird ferner das Beschädigungsrisiko für die Abdeckblenden verringert, da zur Lösung der Verbindung eine einfache leichte Anhebung der Abdeckblende und eine fast kraftlose Herausziehbewegung derselben genügt. Somit ist es auch für nicht besonders geschultes Personal möglich die Abdeckblende auf effizienter und schonender Weise einzusetzen.

Anhand der Zeichnung soll die Erfindung in Form eines Ausführungsbeispiels näher erläutert werden. Es zeigen jeweils:
Fig. 1 eine perspektivische Ansicht eines Ausschnitts eines Beispiels einer erfindungsgemäßen Steckverbindung zwischen einer Abdeckblende und einem anderen Abdeckblendenendteil,
Fig. 2 eine vergrößerte perspektivische Ansicht eines Teils des männlichen Steckers der erfindungsgemäßen Steckverbindung nach Fig. 1,
Fig. 3 eine vergrößerte perspektivische Ansicht eines Teils der komplementären weiblichen Einbuchtung der erfindungsgemäßen Steckverbindung nach Fig. 1.

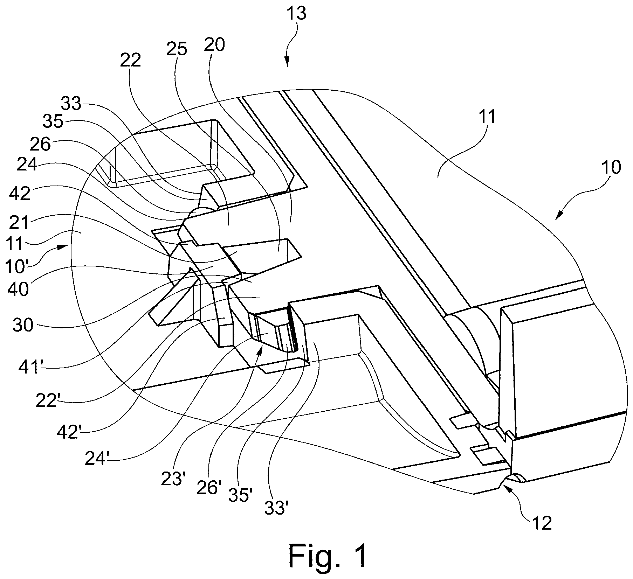

Figur 1 zeigt in einem nicht begrenzenden Beispiel die perspektivische Ansicht eines Teils (Ausschnitt) der Rückseite der erfindungsgemäßen Abdeckblende 10 z. B. für einen (nicht dargestellten) Geräteeinbaukanal.

Die Abdeckblende 10 besteht hier z. B. aus einem flachen reckeckigen Zentralteil mit einer beispielsweise kürzeren Breite als Länge wie dies im Baugewerbe sonst üblich ist. Entlang der Breite der Seite 12 geht am Ende der Abdeckblende 10 ein Rand. Entlang diesem Rand befinden sich in der Regel ein oder mehrere Verbindungsorgane, die eine Verbindung zu anderen ähnlichen oder identischen Abdeckblenden 10 oder wie hier angedeutet zu einer abgerundetem als Endstück 10' ausgebildeten Abdeckblende, die den Kanal seitlich beendet ermöglichen, z. B. in Form einer Einsteck- oder Klippverbindung.

Gemäß der vorliegenden Erfindung wird eine Steckverbindung für die Abdeckblende 10 bereitgestellt wobei die Abdeckblende 10 wie hier eine im Wesentlichen rechteckige ebene Fläche 11 aufweist, wobei deren Rand mindestens an einer der Seiten 12, 13, vorzugsweise an zwei gegenüberliegenden Seiten 12, 13, jeweils mindestens ein männliches und/oder ein weibliches Verbindungsorgan aufweist, die mit entsprechenden männlichen und/oder weiblichen Verbindungsorgane der anderen zu verbindenden benachbarten Abdeckblende 10' formschlüssig kooperieren um beide mit der Hand lösbar zu verbinden, wobei die Steckverbindung jeweils aus einer Kombination aus einem männlichen und einem weiblichen Verbindungsorgan besteht.

Die erfindungsgemäße Steckverbindung ist dadurch gekennzeichnet, dass das männliche Verbindungsorgan als ein Stecker 20 mit einem gabelförmigen Ende 21 mit zwei Stegen 22, 22' ausgebildet ist, das mit einem komplementärem weiblichen Verbindungsorgan formschlüssig kooperiert, das als eine am Rand ausgebildete formschlüssige Einbuchtung oder Nut 30 ausgebildet ist, wobei:
- die Einbuchtung 30 in Richtung Rand gesehen einen im Wesentlichen trapezförmigen Querschnitt 31 aufweist, der mit der jeweils äußeren schrägen Form der zwei Stege 22, 22' formschlüssig kooperiert,
- die Einbuchtung 30 eine horizontale Aufliegefläche 32 aufweist, die zum äußeren freien Rand (der Abdeckblende 10) hin abgeschrägt ist (so dass sich die Dicke dort verringert) und die mit den unten abgeschrägten freien Enden 23, 23' der zwei Stege 22, 22' formschlüssig kooperiert,
- die Einbuchtung 30 entlang ihrer Tiefe (links und rechts) durch zwei seitlichen abgeschrägte Wände 33, 33' begrenzt ist, deren freien Enden 34, 34' zwei ebene vertikale Flächen 35, 35' aufweisen, die mit zwei Vorsprüngen 24, 24' am freien Ende der zwei Stege 22, 22' des Steckers 20 zu dessen Verriegelung in der Einbuchtung 30 kooperieren, und
- die Einbuchtung 30 im Bereich der abgeschrägten Aufliegefläche 36 am äußeren freien Rand einen erweiterten Eingang aufweist, der die Einführung der zwei Vorsprünge 24, 24' des Steckers 20 in die Einbuchtung 30 erleichtert.

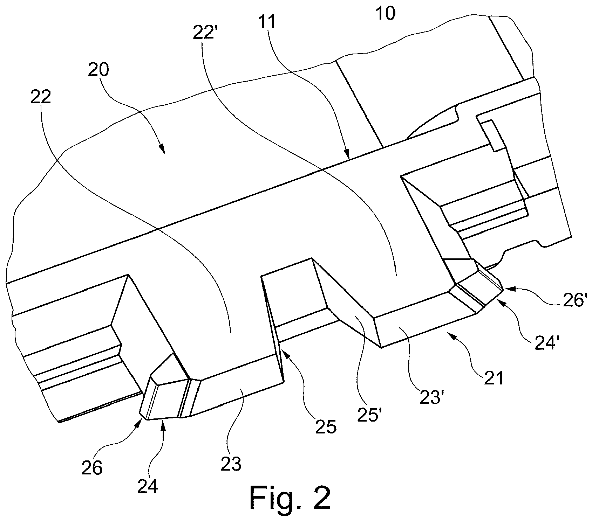

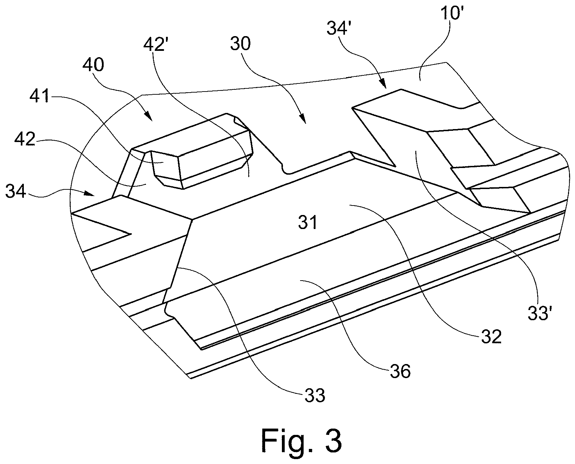

Wie man es aus den Figuren 1 und 2 entnehmen kann, weist die erfindungsgemäße Steckverbindung als männliches Verbindungsorgan einen Stecker 20 mit einem gabelförmigen Ende 21 mit zwei Stegen 22, 22' auf. Der innere freie Raum zwischen den Stegen 22, 22' kann, wie beispielsweise gezeigt, von oben gesehen trapezförmig sein. Eine U-Form oder ähnlich ist auch möglich, ggf. muss dann die äußere Form des Blockiernockens 40 (Fig. 1 und 3) auf diese Geometrie angepasst werden wenn eine solcher Blockiernocken 40 vorhanden ist und mit der besagten Gabel wirkungsvoll zusammenarbeiten soll insbesondere um den Stecker 20 noch besser festzuhalten.

Die erfindungsgemäße Steckverbindung ist somit ferner dadurch gekennzeichnet, dass die inneren Wände 25, 25' der zwei Stege 22, 22', die nicht mit den seitlich abgeschränkten Wänden 33, 33' der Einbuchtung 30 kooperieren mit den Außenflächen 41, 41' eines Blockiernocken 40 kooperieren damit die Entfernung zwischen den zwei Stegen 22, 22' vor und nach komplettem Einschub in die Einbuchtung 30 konstant bleibt. Dies wird auf Figur 1 deutlicher sichtbar.

Ebenso ist die vorliegende Steckverbindung dadurch gekennzeichnet, dass der Blockiernocken 40 weitere Blockierflächen 42, 42' aufweist, die ein weiteres Eindringen der Stege 22, 22' des Steckers 20 in die Einbuchtung 30 verhindern. Die Eindringtiefe des Steckers 20 kann auch allein durch die Länge der hervorstehenden Stege 22, 22' bestimmt werden.

Das zu dem männlichen Stecker 20 komplementäre weibliche Verbindungsorgan ist als eine am Rand ausgebildete formschlüssige Einbuchtung oder Nut 30 ausgebildet, die im Wesentlichen durch den Boden der Abdeckblende 10, 10', zwei seitliche Wandabschnitte und ggf. von dem Blokiernocken 40 begrenzt wird. Diese Wandabschnitte können insbesondere als Teil einer äußeren Randwand der Abdeckblende 10, 10' gebildet sein (s. Figur 1) und werden bei der Herstellung der Blende z. B. im Spritzgießverfahren gebildet. Diese äußere Randwand kann wie in Figur 1 angedeutet ebenfalls noch andere zusätzliche gewöhnliche Mittel aufweisen, die die Verbindung zu einer anderen Blende noch verbessern (zusätzliche andere Stecker/Ausbuchtungen), oder mehr Stabilität, Festigkeit, usw. (Rillen, Verstärkungsrippen...) bringen.

Die so gebildete Einbuchtung 30 weist in Richtung Rand gesehen, also in dieser Randwand, einen im Wesentlichen trapezförmigen Querschnitt 31 auf der mit der jeweils äußeren schrägen Form der zwei Stege 22, 22' formschlüssig kooperiert. Von oben gesehen ist der Eingang der Einbuchtung 30 vorteilhafterweise trichterförmig, so dass die Stege 22, 22' mit ihren hervorstehenden Nasen 26, 26' problemlos eingeführt werden können um sich dann dank der Gabelform ein wenig nach innen zu biegen dort wo die inneren abgeschrägten Wände 33, 33' der Ausbuchtung 30 parallel zu einander verlaufen. Das Ende dieser links und rechts platzierten abgeschrägten Wandabschnitte wird jeweils durch (in Einschubrichtung gesehen) rechtwinklige freie Enden 34, 34' gebildet, die entsprechende vertikale Flächen 35, 35' definieren, die die Vorsprünge 24, 24' der Nasen 26, 26' an den Stegen 22, 22' aufnehmen. Dabei federn die Stege 22, 22' wieder etwas auseinander und wirken dank der Vorsprünge 24, 24' gegen ein Herausziehen des Steckers 20, zumindest bis zu einem gewissen Punkt und so lange die Flächen 11 der verbundenen Elemente 10 oder 10' miteinander fluchten. Die Vorsprünge 24, 24', Nasen 26, 26' und Stege 22, 22' sind so konzipiert, dass die Höhe oder Dicke der Stege 22, 22' ausreichend kleiner ist als die Höhe der seitlich platzierten abgeschrägten Wände 33, 33' so dass eine leichte Biegung oder Neigung der verbundenen Blendenteile um den gemeinsamen Rand möglich ist und bei einem ausreichenden Winkel zu einer leichten Lösung der Verbindung führt. Die abgeschrägten (unteren) freien Enden 23, 23' am linken und rechten Ende der zwei Stege 22, 22' erleichtern dabei die Rotation oder Anwinkelung der beiden Teile die letztendlich zur Lösung der besagten beiden Teile führt (s. Figur 2). Somit erleichtern diese Abschrägungen an den Stegen 22, 22' und an dem abgeschrägten Bereich 36 der horizontalen Aufliegefläche 32 der Einbuchtung 30 sowohl die Einfuhr des Steckers 20 in die Einbuchtung 30 als auch die Trennung der Verbindung durch leichte Rotation oder Biegung der zwei verbundenen Teile.

Die Einbuchtung 30 weist somit erfindungsgemäß eine horizontale Aufliegefläche 32 auf, die zum äußeren freien Rand (der Abdeckblende 10) hin abgeschrägt ist (so dass sich die Dicke dort verringert) und die mit den unten abgeschrägten freien Enden 23, 23' der zwei Stege 22, 22' formschlüssig kooperiert.

Wie insbesondere auf Figur 3 gezeigt, ist die Einbuchtung 30 entlang ihrer Tiefe (links und rechts) durch zwei seitlichen abgeschrägten Wände 33, 33' begrenzt, deren freien Enden 34, 34' zwei ebene vertikale Flächen 35, 35' aufweisen, die mit zwei Vorsprüngen 24, 24' am freien Ende der zwei Stege 22, 22' des Steckers 20 zu dessen Verriegelung in der Einbuchtung 30 kooperieren. Die Einbuchtung 30 weist ferner im Bereich der abgeschrägten Aufliegefläche 36 am äußeren freien Rand einen erweiterten Eingang auf, der die Einführung der zwei Vorsprünge 24, 24' des Steckers 20 in die Einbuchtung 30 erleichtert.

Vorteilhafterweise ist die Einbuchtung 30 und/oder der Stecker 20 und/oder der Blockiernocken 40 einteilig mit der Abdeckblende 10 ausgebildet, z. B. wenn diese mindestens ein männliches Teil und ein komplettes weibliches Teil als Verbindungsorgane aufweist. An einem Rand können z. B. ein Stecker 20 und eine Einbuchtung 30 ausgebildet sein, die mit entsprechenden komplementären Organe eines zu verbindenden Teils zusammenwirken. Andere zusätzliche und verschiedene Verbindungsorgane können die Verbindung ggf. noch ergänzen oder verstärken. Infrage kommen alle üblichen Verbindungsorgane für diese Artikel, die dem Ziel einer einfachen Montage bzw. Demontage nicht oder nicht zu sehr entgegenwirken.

Insbesondere kann als ähnliches zusätzliches Organ mindestens eine Konstruktion ins Auge gefasst werden, die im Wesentlichen aus einem "halben" Stecker 20 und einer "halben" Einbuchtung 30 Verbindung besteht wenn diese z. B. symmetrisch ausführt sind und eine Symmetrieachse aufweisen, so dass nur noch ein einzelner Steg 22 als Stecker 20 übrig bleibt der in einer "halben" Einbuchtung mit einem "halben" Blockiernocken 40 greift.

Andere einfachere Stecker/Einbuchtungssystem sind natürlich ebenfalls möglich, z. B. zusätzliche plattenförmige Stecker, die eher als Führungsmittel für die beiden Teile fungieren und eine leichtere Montage (Verbindung) ermöglichen.

Zum Beispiel kann an den äußeren linken und rechten Enden eines Randes einer Seite 12, 13 der Abdeckblende 10 ein "halber" Stecker 20 bzw. eine "halbe" Einbuchtung 30 vorgesehen werden während in dem mittigen Abschnitt des Randes ein kompletter Stecker 20 herausragt, benachbart zu einer kompletten erfindungsgemäßen Einbuchtung 30. Diese vier Stellen bilden somit vier Verbindungspunkte und verteilen die mechanische Verbindung besser entlang des ganzen Randes.

Wie oben erklärt ist die erfindungsgemäße Steckverbindung noch dadurch gekennzeichnet, dass die zwei Vorsprünge 24, 24' am freien Ende der zwei Stege 22, 22' als zwei sich nach außen hin verjüngende und außen abgerundete Nasen 26, 26' ausgebildet sind. Diese Vorsprünge 24, 24' wirken wie Verriegelungsnocken der Schwalbenschwanzführung des Steckers 20.

Vorteilhafterweise wird also auch vorgesehen, dass der Stecker 20 und/oder die Einbuchtung 30 und/oder der Blockiernocken 40 eine Symmetrieachse aufweisen, die parallel zur Einschubrichtung des Steckers 20 in die Einbuchtung 30 ist.

In einer besonders bevorzugten Variante ist die Steckverbindung dadurch gekennzeichnet, dass der Stecker 20 und die Einbuchtung 30 und der Blockiernocken 40 eine Symmetrieachse aufweisen, die parallel zur Einschubrichtung des Steckers 20 in die Einbuchtung 30 ist.

Eine andere Weiterbildung der Erfindung ist dadurch gekennzeichnet, dass die oberen Oberflächen der Einbuchtung 30 und des Steckers 20 fluchtend und eben flach ausgebildet sind.

Die vorliegende Erfindung betrifft ebenfalls eine Abdeckblende, insbesondere für Geräteeinbaukanäle, wobei die Abdeckblende 10 insbesondere eine im Wesentlichen rechteckige oder quadratische ebene Fläche 11 aufweist, wobei deren Rand mindestens an einer der Seiten 12, 13, vorzugsweise an zwei gegenüberliegenden Seiten 12, 13, jeweils mindestens ein Stecker 20 und/oder eine Einbuchtung 30 aufweist, der bzw. die mit einem entsprechenden Stecker 20 und/oder einer entsprechenden Einbuchtung 30 der zu verbindenden anderen Abdeckblende 10, 10' kooperieren um beide mit der Hand lösbar zu verbinden, dadurch gekennzeichnet, dass die Steckverbindung nach der vorliegenden Erfindung ausgebildet ist.

In einer bevorzugten Form ist die erfindungsgemäße Abdeckblende 10, dadurch gekennzeichnet, dass zumindest ein Rand einer Seite 12, 13 ein Stecker 20 und eine Einbuchtung 30 aufweist um jeweils eine Steckverbindung nach der vorliegenden Erfindung auszubilden.

Dank der vorliegenden Erfindung können ansonsten bekannte Abdeckblenden 10 oder ähnliche Teile wie Endstücke vom Monteur leicht miteinander verbunden werden um eine längere Abdeckung zu bilden, die dann am Geräteeinbaukanal wie gewohnt befestigt wird um den Kanal abzudecken. Dank der speziellen Ausgestaltung können die Verbindungen auch wieder sehr leicht von Hand gelöst werden indem die verbundene Teile einfach entlang des Verbindungsrandes leicht nach außen geknickt werden. Diese Bewegung der leichten Anwinkelung löst dann automatisch die Vorsprünge 24, 24' der Nasen 26, 26' der Stecker 20 von den abgeschrägten Wänden 33, 33' der Einbuchtungen 30. Der Stecker 20 rutscht dann einfach aus der Einbuchtung 30 heraus. Dank der erfindungsgemäßen Konstruktion und insbesondere der schwalbenschwanzförmigen Ausführung des Steckers 20 und der schwalbenschwanzförmigen Ausführung des Querschnittes der Einbuchtung 30 ist die Verbindung dennoch genügend stabil und stark um die Handhabung der verbundenen Teile gewährleisten zu können ohne, dass eine unerwünschte Trennung erfolgt. Die aufzuwendende Kraft für eine Trennung ist bei einem geraden Herausziehen des Steckers 20 aus der Einbuchtung 30, d. h. in einer Richtung, die parallel zur Fläche 11 der Abdeckblende 10, 10' ist im Vergleich zu einer Trennung durch Anwinkelung wie oben beschrieben erheblich größer.

## Patentansprüche

1. Steckverbindung für Abdeckblenden, insbesondere von Abdeckblenden (10) für Geräteeinbaukanäle, wobei die Abdeckblende (10) eine im Wesentlichen rechteckige oder quadratische ebene Fläche (11) aufweist, wobei deren Rand mindestens an einer der Seiten (12, 13), jeweils mindestens ein männliches und/oder ein weibliches Verbindungsorgan aufweist, die mit entsprechenden männlichen und/oder weiblichen Verbindungsorgane einer anderen zu verbindenden benachbarten Abdeckblende (10, 10'), formschlüssig kooperieren um beide mit der Hand lösbar zu verbinden, wobei die Steckverbindung aus einer Kombination aus einem männlichen und einem weiblichen Verbindungsorgan besteht, **dadurch gekennzeichnet, dass** das männliche Verbindungsorgan als ein Stecker (20) mit einem gabelförmigen Ende (21) mit zwei Stegen (22, 22') ausgebildet ist, das mit einem komplentärem weiblichen Vebindungsorgan formschlüssig kooperiert, das als eine am Rand ausgebildete formschlüssige Einbuchtung (30) ausgebildet ist, wobei:
- die Einbuchtung (30) in Richtung Rand gesehen einen im Wesentlichen trapezförmigen Querschnitt (31) aufweist, der mit der jeweils äußeren schrägen Form der zwei Stege (22, 22') formschlüssig kooperiert,
- die Einbuchtung (30) eine horizontale Aufliegefläche (32) aufweist, die zum äußeren freien Rand hin abgeschrägt ist und die mit den unten abgeschrägten freien Enden (23, 23') der zwei Stege formschlüssig kooperiert,
- die Einbuchtung entlang ihrer Tiefe, links und rechts, durch zwei seitlichen abgeschrägte Wände (33, 33') begrenzt ist, deren freien Enden (34, 34') zwei ebene vertikale Flächen (35, 35') aufweisen, die mit zwei Vorsprüngen (24, 24') am freien Ende der zwei Stege (22, 22') des Steckers (20) zu dessen Verriegelung in der Einbuchtung (30) kooperien, und
- die Einbuchtung (30) im Bereich der abgeschrägten Aufliegefläche (36) am äußeren freien Rand einen erweiterten Eingang aufweist, der die Einführung der zwei Vorsprünge (24, 24') des Steckers (20) in die Einbuchtung (30) erleichert.

2. Steckverbindung für Abdeckblenden nach Anspruch 1, **dadurch gekennzeichnet, dass** die inneren Wände (25, 25') der zwei Stege (22, 22') die nicht mit den seitlich abgeschränkten Wänden (33, 33') der Einbuchtung (30) kooperieren mit den Außenflächen (41, 41') eines Blockiernocken (40) kooperieren damit die Entfernung zwischen den zwei Stegen (22, 22') vor und nach komplettem Einschub in die Einbuchtung (30) konstant bleibt.

3. Steckverbindung nach Anspruch 2, **dadurch gekennzeichnet, dass** der Blockiernocken (40) weitere Blockierflächen (42, 42') aufweist, die ein weiteres Eindringen der Stege (22, 22') des Steckers (20) in die Einbuchtung (30) verhindern.

4. Steckverbindung Anspruch 2 oder 3, **dadurch gekennzeichnet, dass** die Einbuchtung (30) und/oder der Stecker (20) und/oder der Blockiernocken (40) einteilig mit der Abdeckblende (10) ausgebildet ist/sind.

5. Steckverbindung nach einem der Ansprüche 1 bis 4, **dadurch gekennzeichnet, dass** die zwei Vorsprünge (24, 24') am freien Ende der zwei Stege (22, 22') als zwei sich nach außen hin verjüngende und außen abgerundete Nasen (26, 26') ausgebildet sind.

6. Steckverbindung nach einem der Ansprüche 1 bis 5, **dadurch gekennzeichnet, dass** der Stecker (20) und/oder die Einbuchtung (30) und/oder der Blockiernocken (40) eine Symmetrieachse aufweisen, die parallel zur Einschubrichtung des Steckers (20) in die Einbuchtung (30) ist.

7. Steckverbindung nach Anspruch 6, **dadurch gekennzeichnet, dass** der Stecker (20) und die Einbuchtung (30) und der Blockiernocken (40) eine Symmetrieachse aufweisen, die parallel zur Einschubrichtung des Steckers (20) in die Einbuchtung (30) ist.

8. Steckverbindung nach einem der Ansprüche 1 bis 7, **dadurch gekennzeichnet, dass** die oberen Oberflächen der Einbuchtung (30) und des Steckers (20) fluchtend und eben flach ausgebildet sind.

9. Abdeckblende, insbesondere für Geräteeinbaukanäle, wobei die Abdeckblende (10) eine im Wesentlichen rechteckige oder quadratische ebene Fläche (11) aufweist, wobei deren Rand mindestens an einer der Seiten (12, 13), jeweils mindestens einen Stecker (20) und/oder eine Einbuchtung (30) aufweist, der bzw. die mit einem entsprechenden Stecker (20) und/oder einer entsprechenden Einbuchtung (30) der zu verbindenden anderen Abdeckblende kooperieren um beide mit der Hand lösbar zu verbinden, **dadurch gekennzeichnet, dass** eine Steckverbindung nach einem der Ansprüche 1 bis 8 ausgebildet ist und zwei benachbarte Abdeckblenden verbindet.

10. Abdeckblende nach Anspruch 9, **dadurch gekennzeichnet, dass** zumindest ein Rand einer Seite (12, 13) ein Stecker (20) und eine Einbuchtung (30) aufweist um jeweils eine Steckverbindung nach einem der Ansprüche 1 bis 8 auszubilden.

## Claims

1. Plug-in connection for covering panels, in particular of covering panels (10) for device installation channels, wherein the covering panel (10) has a substantially rectangular or square planar surface (11), wherein the edge of the said covering panel, at least on one of the sides (12, 13), has in each case at least one male and/or one female connecting element which cooperate/cooperates in an interlocking manner with corresponding male and/or female connecting elements of another adjacent covering panel (10, 10') which is to be connected in order to manually connect the said two covering panels in a releasable manner, wherein the plug-in connection comprises a combination of one male and one female connecting element, **characterized in that** the male connecting element is designed as a plug (20) with a fork-like end (21) having two webs (22, 22') and cooperates in an interlocking manner with a complementary female connecting element which is designed as an interlocking recess (30) which is formed at the edge, wherein:
- the recess (30), as seen in the direction of the edge, has a substantially trapezoidal cross section (31) which cooperates in an interlocking manner with the respectively outer oblique shape of the two webs (22, 22'),
- the recess (30) has a horizontal bearing surface (32) which is bevelled in the direction of the outer free edge and which cooperates in an interlocking manner with the free ends (23, 23') of the two webs, which free ends are bevelled at the bottom,
- the recess is delimited along its depth, to the left and to the right, by two laterally bevelled walls (33, 33') of which the free ends (34, 34') have two planar vertical surfaces (35, 35') which cooperate with two projections (24, 24') at the free end of the two webs (22, 22') of the plug (20) for the purpose of locking the said plug in the recess (30), and
- the recess (30), in the region of the bevelled bearing surface (36) at the outer free edge, has a widened input which makes it easier to insert the two projections (24, 24') of the plug (20) into the recess (30) .

2. Plug-in connection for covering panels according to Claim 1, **characterized in that** the inner walls (25, 25') of the two webs (22, 22') which do not cooperate with the laterally bevelled walls (33, 33') of the recess (30) cooperate with the outer surfaces (41, 41') of a blocking cam (40) so that the distance between the two webs (22, 22') remains constant before and after complete insertion into the recess (30).

3. Plug-in connection according to Claim 2, **characterized in that** the blocking cam (40) has further blocking surfaces (42, 42') which prevent further ingress of the webs (22, 22') of the plug (20) into the recess (30).

4. Plug-in connection according to Claim 2 or 3, **characterized in that** the recess (30) and/or the plug (20) and/or the blocking cam (40) are/is integrally formed with the covering panel (10).

5. Plug-in connection according to one of Claims 1 to 4, **characterized in that** the two projections (24, 24') at the free end of the two webs (22, 22') are designed as two lugs (26, 26') which taper towards the outside and are rounded on the outside.

6. Plug-in connection according to one of Claims 1 to 5, **characterized in that** the plug (20) and/or the recess (30) and/or the blocking cam (40) have an axis of symmetry which is parallel to the direction of insertion of the plug (20) into the recess (30).

7. Plug-in connection according to Claim 6, **characterized in that** the plug (20) and the recess (30) and the blocking cam (40) have an axis of symmetry which is parallel to the direction of insertion of the plug (20) into the recess (30).

8. Plug-in connection according to one of Claims 1 to 7, **characterized in that** the upper surfaces of the recess (30) and of the plug (20) are designed to be flush and flat in a planar manner.

9. Covering panel, in particular for device installation channels, wherein the covering panel (10) has a substantially rectangular or square planar surface (11), wherein the edge of the said covering panel, at least on one of the sides (12, 13), has in each case at least one plug (20) and/or one recess (30) which cooperate/cooperates with a corresponding plug (20) and/or a corresponding recess (30) of the other covering panel which is to be connected in order to manually connect the said two covering panels in a releasable manner, **characterized in that** a plug-in connection is designed according to one of Claims 1 to 8 and connects two adjacent covering panels.

10. Covering panel according to Claim 9, **characterized in that** at least one edge of one side (12, 13) has a plug (20) and a recess (30) in order to in each case form a plug-in connection according to one of Claims 1 to 8.

## Revendications

1. Connexion enfichable pour couvercles, en particulier pour couvercles (10) de goulottes d'installation d'appareils, le couvercle (10) présentant une surface plane (11) sensiblement rectangulaire ou carrée, dont le bord présente au moins sur l'un des côtés (12, 13) chaque fois au moins un élément de connexion mâle et/ou un élément de connexion femelle qui coopèrent par complémentarité de forme avec des éléments de connexion mâle et/ou femelle correspondants d'un autre couvercle adjacent (10, 10') à connecter afin de connecter les deux de manière détachable à la main, la connexion enfichable consistant en une combinaison d'un élément de connexion mâle et d'un élément de connexion femelle, **caractérisée en ce que** l'élément de connexion mâle est réalisé sous la forme d'un connecteur (20) avec une extrémité (21) en forme de fourche à deux dents (22, 22') qui coopère par complémentarité de forme avec un élément de connexion femelle complémentaire qui est réalisé sous la forme d'un creux de forme complémentaire (30) formé au bord, dans laquelle :
- le creux (30) présente, vu en direction du bord, une section transversale sensiblement trapézoïdale (31) qui coopère par complémentarité de forme avec la forme oblique extérieure respective des deux dents (22, 22'),
- le creux (30) présente une surface d'appui horizontale (32) qui est biseautée en direction du bord libre extérieur et qui coopère par complémentarité de forme avec les extrémités libres (23, 23') biseautées vers le bas des deux dents,
- le creux est limité le long de sa profondeur, à gauche et à droite, par deux parois latérales biseautées (33, 33') dont les extrémités libres (34, 34') présentent deux surfaces verticales planes (35, 35') qui coopèrent avec deux saillies (24, 24') à l'extrémité libre des deux dents (22, 22') du connecteur (20) pour son verrouillage dans le creux (30), et
- le creux (30) présente dans la zone de la surface d'appui biseautée (36) sur le bord libre extérieur une entrée élargie qui facilite l'introduction des deux saillies (24, 24') du connecteur (20) dans le creux (30).

2. Connexion enfichable pour couvercles selon la revendication 1, **caractérisée en ce que** les parois intérieures (25, 25') des deux dents (22, 22') qui ne coopèrent pas avec les parois latérales biseautées (33, 33') du creux (30) coopèrent avec les surfaces extérieures (41, 41') d'un ergot de blocage (40) de sorte que la distance entre les deux dents (22, 22') avant et après l'insertion complète dans le creux (30) reste constante.

3. Connexion enfichable selon la revendication 2, **caractérisée en ce que** l'ergot de blocage (40) présente d'autres surfaces de blocage (42, 42') qui empêchent une pénétration supplémentaire des dents (22, 22') du connecteur (20) dans le creux (30).

4. Connexion enfichable selon la revendication 2 ou 3, **caractérisée en ce que** le creux (30) et/ou le connecteur (20) et/ou l'ergot de blocage (40) sont formés d'une seule pièce avec le couvercle (10).

5. Connexion enfichable selon l'une des revendications 1 à 4, **caractérisée en ce que** les deux saillies (24, 24') à l'extrémité libre des deux dents (22, 22') sont réalisées sous la forme de deux nez (26, 26') effilés vers l'extérieur et extérieurement arrondis.

6. Connexion enfichable selon l'une des revendications 1 à 5, **caractérisée en ce que** le connecteur (20) et/ou le creux (30) et/ou l'ergot de blocage (40) présentent un axe de symétrie qui est parallèle à la direction d'insertion du connecteur (20) dans le creux (30).

7. Connexion enfichable selon la revendication 6, **caractérisée en ce que** le connecteur (20), le creux (30) et l'ergot de blocage (40) présentent un axe de symétrie qui est parallèle à la direction d'insertion du connecteur (20) dans le creux (30).

8. Connexion enfichable selon l'une des revendications 1 à 7, **caractérisé en ce que** les surfaces supérieures du creux (30) et du connecteur (20) sont alignées et planes.

9. Couvercle, en particulier pour goulottes d'installation d'appareils, le couvercle (10) présentant en particulier une surface plane (11) sensiblement rectangulaire ou carrée, dont le bord présente au moins sur l'un des côtés (12, 13) chaque fois au moins un connecteur (20) et/ou un creux (30) qui coopèrent avec un connecteur correspondant (20) et/ou un creux correspondant (30) de l'autre couvercle à connecter afin de connecter les deux de manière détachable à la main, **caractérisé en ce qu'**une connexion enfichable selon l'une des revendications 1 à 8 est formée et connecte deux couvercles adjacents.

10. Couvercle selon la revendication 9, **caractérisé en ce qu'**au moins un bord d'un côté (12, 13) présente un connecteur (20) et un creux (30) pour former chaque fois une connexion enfichable selon l'une des revendications 1 à 8.
